# FASCICULE DE BREVET EUROPEEN

(11) **EP 4 268 428 B1**
(45) Date de publication et mention de la délivrance du brevet: **11.03.2026**
(21) Numéro de dépôt: 21848272.7
(22) Date de dépôt: 10.12.2021
(51) Int. Cl.: H04L 12/46, H04L 45/50, H04L 45/00

(54) **PROCEDES DE COMMUNICATION, PROXYS VIRTUELS ET SYSTEME INFORMATIQUE POUR LA MISE EN OEUVRE DE TELS PROCEDES**
KOMMUNIKATIONSVERFAHREN, VIRTUELLE PROXIES UND RECHNERSYSTEM ZUR IMPLEMENTIERUNG SOLCHER VERFAHREN
COMMUNICATION METHODS, VIRTUAL PROXIES AND COMPUTER SYSTEM FOR IMPLEMENTING SUCH METHODS

(30) Priorité: 23.12.2020 FR 2014054
(43) Date de publication de la demande: 01.11.2023
(73) Titulaire: Orange, 92130 Issy-les-Moulineaux (FR)
(72) Inventeur: LEMOINE, Benoît, 92326 CHÂTILLON CEDEX (FR)
(74) Mandataire: Cabinet Beau de Loménie
(86) Numéro de dépôt international: PCT/FR2021/052274
(87) Numéro de publication internationale: WO 2022/136762

(56) Documents cités:
- EP-A1- 3 745 658
- WO-A1-2012/006190
- US-A1- 2017 195 220

## Description

### Technique antérieure

La présente invention appartient au domaine général des télécommunications. Elle concerne plus particulièrement des procédés de communication mis en œuvre par des entités d'un système informatique implémentant un réseau local virtuel de commutation, ainsi que les entités et le système informatique en question. L'invention trouve une application particulièrement avantageuse, bien que nullement limitative, dans le cadre d'un centre de données de petite ou moyenne taille, soit donc sensiblement d'une centaine de machines au maximum.

La technologie de virtualisation informatique est aujourd'hui bien connue. Dans son principal général, elle consiste à créer et exécuter, sur une plateforme de virtualisation (couramment appelée « machine hôte »), une ou plusieurs représentations virtuelles d'un ordinateur ou de ses différentes ressources, comme par exemple un système d'exploitation, un serveur, un bureau, un système de stockage, un réseau, etc. Ces ressources simulées sont en tous points identiques à leurs versions physiques localisées côté client.

Une telle plateforme de virtualisation peut par exemple comporter une pluralité de couches, dont notamment :
- une couche de virtualisation ou hyperviseur, et
- une couche d'une ou plusieurs machines virtuelles, chaque machine virtuelle exécutant une instance de système d'exploitation unique, appelée système d'exploitation invité, et fonctionnant indépendamment des autres machines virtuelles de la plateforme de virtualisation.
Le déploiement automatisé des machines virtuelles sur la couche de virtualisation est assuré par un gestionnaire de machine virtuelle (encore dite « Virtual Machine Manager » en anglais).

Il est à noter que la technologie de virtualisation ne se limite pas à la mise en œuvre de machines virtuelles mais concerne également, de manière connue en soi, la mise en œuvre d'ensembles de containers (encore dits « pods » anglais).

En outre, la technologie de virtualisation peut se décliner selon différents types, comme par exemple la virtualisation de serveurs et de réseau aujourd'hui de plus en plus utilisée. C'est notamment le cas d'une part toujours plus importante d'entreprises cherchant à concentrer leurs ressources informatiques dans des centres de données (encore dits « datacenters » en anglais) et ainsi optimiser leurs capacités virtuelles de calcul/traitement, encore connue sous l'appellation « cloud computing » en anglais.

Aussi, pour accompagner le développement de la technologie de virtualisation de serveurs et de réseau, les opérateurs de télécommunication ont fait évoluer leurs pratiques. Plus particulièrement, ces opérateurs utilisaient jusque-là des équipements de télécommunication physiques, basés sur des processeurs spécialisés ASIC (acronyme de l'expression anglaise « Application Specific Integrated Circuit » ), et physiquement connectés à des réseaux privés virtuels (encore dits « Virtual Private Networks », ou « VPN », en anglais) par des interfaces dédiées sur des routeurs IP/MPLS (« IP » pour « Internet Protocol » et « MPLS » pour « Multi Label Protocol Switching » en anglais) mettant en œuvre ces VPNs.

Dorénavant, lesdits opérateurs réalisent des développements permettant de mettre en œuvre des services de télécommunication basés sur des fonctions réseau virtuelles (encore dites « Virtual Network Functions », ou « VNF », en anglais), qui correspondent plus précisément à des composants logiciels déployés sur des machines virtuelles ou sur des containers dans un ensemble de serveurs informatiques virtualisés. Il s'agit par exemple de fonctions réseau virtuelles élémentaires telles que des ponts Ethernet virtuels (exemples : ponts Linux, ou bien switches Ethernet virtuels comme par exemple les switches OpenVSwitch) ou bien encore des fonctions réseau virtuelles plus élaborées comme des passerelles de réseau mobile (exemples : Packet Data Network Gateway pour les réseaux mobiles 4G ou bien User Plane Function pour les réseaux mobiles 5G).

Pour raccorder sur un même réseau de commutation Ethernet VLAN (acronyme de l'expression anglaise « Virtual Local Area Network »), établi à travers un centre de données, des interfaces Ethernet virtuelles de VNFs définies sur plusieurs VPNs de réseaux IP/MPLS, les solutions déployées jusqu'à aujourd'hui ont pour point commun de s'appuyer sur une architecture informatique mettant en œuvre, dans chaque serveur du centre de données, un routeur, connu sous le nom de routeur « PE » (acronyme de l'expression anglaise « Provider Edge »), qui permet de raccorder une ou plusieurs machines virtuelles, encore dites hôtes « CE » (acronyme de l'expression anglaise « Customer Edge »), aux VPNs en question.

Dès lors, pour transporter de façon isolée dans un VPN le trafic en provenance d'un hôte CE source vers un hôte CE destination, le routeur PE source associé audit hôte CE source doit utiliser un tunnel de VPN à destination du routeur PE distant associé audit hôte CE destination. Plus particulièrement, le trafic en provenance d'un hôte CE source est inséré (encapsulé) dans un tunnel par le routeur PE source, le routeur PE destination ayant pour fonction d'extraire ce trafic du tunnel afin qu'il soit transmis à l'hôte CE destination.

Une telle mise en œuvre, commune aux solutions de l'état de la technique, a plusieurs conséquences. En effet, et dans un premier temps, la transmission de trafic au travers de tunnels implique que le routeur PE source se doit d'identifier le routeur PE destination sur lequel est raccordé l'hôte CE destination. Pour ce faire, une table de commutation associant les adresses de chaque hôte CE distant et du routeur PE distant attaché à ce dernier est implémentée au niveau du routeur PE source. Il résulte de ces considérations que le routeur PE source doit mettre à jour ladite table de commutation à chaque fois qu'un hôte distant est identifié.

Dans un deuxième temps, force est de constater qu'il n'existe pas de façon unique d'insérer (d'encapsuler) le trafic dans des tunnels de VPN, et que toutes les solutions pouvant être mises en œuvre ne sont pas compatibles les unes avec les autres. Il en résulte alors, pour un opérateur de télécommunication, une grande limitation dans la possibilité de panacher les solutions de différents fournisseurs de services au sein d'un centre de données.

Il résulte finalement de ce qui précède que l'utilisation de routeur PE dans des serveurs d'un centre de données présente des désavantages en termes de complexité d'implémentation, rendant ainsi difficile la garantie de performances de débit de transfert ainsi que la garantie d'un fonctionnement sans défaut. En outre, cette complexité induit elle-même un coût d'implémentation important qui se révèle être incompatible avec la tendance actuelle visant à privilégier la concentration de ressources informatiques dans des centres de données.

Le document US 2017/195220 A1 décrit une méthode de résolution d'une adresse IP/MAC. Exposé de l'invention

La présente invention a pour objectif de remédier à tout ou partie des inconvénients de l'art antérieur, notamment ceux exposés ci-avant, en proposant une solution qui permette de raccorder sur un même réseau de commutation Ethernet VLAN des interfaces Ethernet virtuelles de VNFs définies sur plusieurs VPNs de réseaux IP/MPLS, de manière plus simple et moins onéreuse que les solutions de l'état de la technique, de sorte à pouvoir garantir des performances de débit de transfert ainsi que de fonctionnement sans défaut.

A cet effet, et selon un premier aspect, l'invention concerne un procédé de communication, dit « premier procédé », mis en œuvre par un proxy virtuel de commutation multiprotocole avec étiquette, dit « proxy source », appartenant à un système informatique implémentant un réseau local virtuel de commutation, ledit système informatique comportant en outre un système de gestion de virtualisation, un premier serveur dans lequel sont connectés ledit proxy source et un hôte dit « hôte source », un deuxième serveur dans lequel sont connectés un proxy virtuel de commutation multiprotocole avec étiquette, dit « proxy destination », et un hôte, dit « hôte destination », lesdits proxys source et destination étant connectés au réseau local ainsi que rattaché à un réseau privé virtuel de communication. Ledit premier procédé comporte des étapes de :
- exécution d'une requête reçue en provenance du système de gestion de virtualisation pour configurer, sur ledit réseau privé, une interface virtuelle pour ledit hôte source, ladite requête comportant une demande d'association d'une adresse matérielle de l'hôte source avec un identifiant, dit « identifiant tunnel », associé à un identifiant dudit réseau privé,
- transmission au proxy destination d'une requête émise par l'hôte source, ladite requête étant une requête de résolution d'adresse pour une adresse IP de l'hôte destination,
- transmission à l'hôte source d'une réponse à ladite requête de résolution, ladite réponse étant émise par l'hôte destination et reçue en provenance du proxy destination, ainsi que comportant une adresse matérielle dudit hôte destination.

De manière fondamentale, le premier procédé selon l'invention se distingue de l'état de la technique en ce que les fonctions routeurs PE dans des serveurs informatiques sont ici remplacées par des fonctions proxy.

Il résulte de cela que ledit premier procédé permet de configurer le système informatique de sorte que le proxy source a pour seule connaissance, en tant qu'adresse de prochain saut, l'adresse matérielle de l'hôte source. Les requêtes de résolution d'adresse IP étant des requêtes à destination de l'ensemble des hôtes IP sur le réseau local virtuel de commutation, le proxy source peut les relayer sans connaître l'adresse matérielle de l'hôte destination. Les réponses de résolution d'adresse IP étant des réponses à destination de l'adresse matérielle de l'hôte source, le proxy source peut les relayer sur la simple connaissance de l'association entre l'adresse matérielle de l'hôte source et l'interface virtuelle sur laquelle il est raccordé. De cette manière, l'hôte source est en mesure de retrouver l'adresse matérielle de l'hôte destination sans solliciter le proxy source et en raccordant l'hôte destination portant cette adresse IP de prochain saut sur le même réseau local virtuel de commutation que celui sur lequel est raccordée l'interface de l'hôte source.

Ledit premier procédé prévoit en outre que l'identifiant tunnel soit identique pour toutes les interfaces Ethernet virtuelles de VNFs définies sur le même réseau privé, ce qui permet de configurer ce dernier une seule fois par interface Ethernet virtuelle dans le proxy source, au moment du raccordement dudit hôte source audit proxy source. De telles dispositions sont particulièrement avantageuses puisque l'identifiant tunnel ne dépend pas ici de l'hôte destination, facilitant ainsi le raccord d'interfaces Ethernet virtuelles de VNFs définies sur plusieurs VPNs.

Il est à noter que l'invention trouve une application particulièrement avantageuse, bien que nullement limitative, dans le cadre d'un système informatique implémenté dans un centre de données de petite ou moyenne taille, soit donc sensiblement d'une centaine de machines au maximum, de manière à ce que des commutateurs Ethernet reliant les serveurs à l'intérieur du système informatique soient en mesure de traiter l'intégralité des adresses Ethernet exposées sur le réseau local virtuel de commutation.

Dans des modes particuliers de mise en œuvre, le premier procédé de communication peut comporter en outre l'une ou plusieurs des caractéristiques suivantes, prises isolément ou selon toutes les combinaisons techniquement possibles.

Dans des modes particuliers de mise en œuvre, ledit premier procédé comporte en outre des étapes de :
- réception, en provenance de l'hôte source, d'une trame Ethernet encapsulant un paquet IP émis par l'hôte source à destination de l'hôte destination, ladite trame Ethernet comportant les adresses matérielles respectifs des hôtes source et destination,
- insertion dans la trame Ethernet de l'identifiant tunnel entre lesdites adresses matérielles et le paquet IP,
- transmission de ladite trame Ethernet au proxy destination.

De telles dispositions permettent au proxy source de faire passer, auprès du proxy destination, l'hôte source comme étant la source d'un tunnel de VPN. Réciproquement, le proxy destination est en mesure de faire passer, auprès du proxy source, l'hôte destination comme étant la destination d'un tunnel de VPN. Autrement dit, lesdits proxy source et destination apparaissent ici, grâce à l'invention, comme des points de terminaison d'un tunnel de VPN.

Dans des modes particuliers de mise en œuvre, l'identifiant tunnel est identique à l'identifiant du réseau privé.

Dans des modes particuliers de mise en œuvre, l'identifiant tunnel est contenu dans une table de données mettant en correspondance l'identifiant du réseau privé avec ledit identifiant tunnel.

Selon un deuxième aspect, l'invention concerne un procédé de communication, dit « deuxième procédé », mis en œuvre par un proxy virtuel de commutation multiprotocole avec étiquette, dit « proxy destination », appartenant à un système informatique implémentant un réseau local virtuel de commutation, ledit système informatique comportant en outre un système de gestion de virtualisation, un premier serveur dans lequel sont connectés un proxy virtuel de commutation multiprotocole avec étiquette, dit « proxy source », et un hôte, dit « hôte source », un deuxième serveur dans lequel sont connectés ledit proxy destination ainsi qu'un hôte dit « hôte destination », lesdits proxys source et destination étant connectés au réseau local ainsi que rattaché à un réseau privé virtuel de communication. Ledit deuxième procédé comporte des étapes de :
- transmission à l'hôte destination d'une requête reçue en provenance du proxy source et émise par l'hôte source, ladite requête étant une requête de résolution d'adresse pour une adresse IP de l'hôte destination,
- transmission au proxy source d'une réponse à ladite requête de résolution, ladite réponse étant émise par l'hôte destination et comportant une adresse matérielle dudit hôte destination.

Ledit deuxième procédé hérite des mêmes avantages que ceux mentionnés ci-avant en référence audit premier procédé.

Dans des modes particuliers de mise en œuvre, le deuxième procédé de communication peut comporter en outre l'une ou plusieurs des caractéristiques suivantes, prises isolément ou selon toutes les combinaisons techniquement possibles.

Dans des modes particuliers de mise en œuvre, ledit deuxième procédé comporte en outre des étapes de :
- réception, en provenance du proxy source, d'une trame Ethernet encapsulant un paquet IP, ladite trame Ethernet comportant les adresses matérielles respectifs des hôtes source et destination,
- vérification d'une correspondance entre, d'une part, un premier identifiant, dit « identifiant tunnel », inséré entre lesdites adresses matérielles et le paquet IP, et, d'autre part, un deuxième identifiant contenu dans une table de données mettant en correspondance l'adresse matérielle de l'hôte destination avec ledit deuxième identifiant,
- si la vérification de correspondance est positive, retrait de l'identifiant tunnel de ladite trame Ethernet et transmission de la trame Ethernet à l'hôte destination.

Dans des modes particuliers de mise en œuvre desdits premier et deuxième procédés, une table de données contenant un identifiant utilisé par un proxy est une table de commutation stockée par ledit proxy.

Dans des modes particuliers de mise en œuvre desdits premier et deuxième procédés, une table de données contenant un identifiant utilisé par un proxy est une table de commutation stockée par un pont Ethernet virtuel auquel est connecté l'hôte contenu dans le serveur hébergeant ledit proxy

Selon un troisième aspect, l'invention concerne un programme d'ordinateur comportant des instructions pour la mise en œuvre d'un premier procédé selon l'invention ou d'un deuxième procédé selon l'invention lorsque ledit programme d'ordinateur est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un quatrième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un cinquième aspect, l'invention concerne un proxy virtuel de commutation multiprotocole avec étiquette, dit « proxy source », comportant des moyens configurés pour mettre en œuvre un premier procédé selon l'invention.

Selon un sixième aspect, l'invention concerne un proxy virtuel de commutation multiprotocole avec étiquette, dit « proxy destination », comportant des moyens configurés pour mettre en œuvre un deuxième procédé selon l'invention.

Selon un septième aspect, l'invention concerne un système informatique implémentant un réseau local virtuel de commutation, ledit système informatique comportant un système de gestion de virtualisation, un premier serveur dans lequel sont connectés un proxy source selon l'invention et un hôte dit « hôte source », un deuxième serveur dans lequel sont connectés un proxy destination selon l'invention et un hôte, dit « hôte destination », lesdits premier et deuxième serveurs étant connectés au réseau local ainsi que rattachés à un réseau privé virtuel de communication.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement, dans son environnement, un mode particulier de réalisation d'un système informatique selon l'invention ;
[Fig. 2] la figure 2 représente schématiquement un exemple d'architecture matérielle d'un proxy virtuel selon l'invention, dit « proxy source », appartenant au système informatique de la figure 1 ;
[Fig. 3] la figure 3 représente schématiquement un exemple d'architecture matérielle d'un proxy virtuel selon l'invention, dit « proxy destination », appartenant au système informatique de la figure 1 ;
[Fig. 4] la figure 4 représente, sous forme d'ordinogramme, un mode particulier d'un procédé de communication, dit « procédé général », mis en œuvre par le système informatique de la figure 1, ledit procédé général englobant un premier procédé selon l'invention et un deuxième procédé selon l'invention respectivement mis en œuvre par le proxy source de la figure 2 et le proxy destination de la figure 3 ;
[Fig. 5] la figure 5 représente schématiquement une trame Ethernet transmise par le proxy source de la figure 2 au proxy destination de la figure 3 au cours de la mise en œuvre du procédé général de la figure 4.

### Description des modes de réalisation

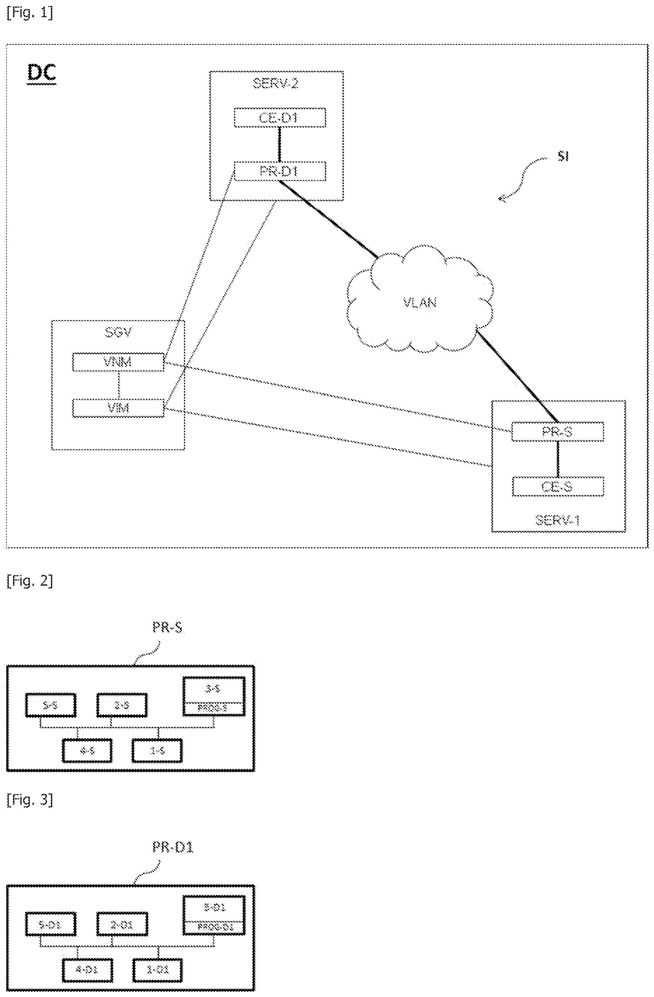

La figure 1 représente schématiquement, dans son environnement, un mode particulier de réalisation d'un système informatique SI selon l'invention.

Dans le mode de réalisation de la figure 1, le système informatique SI est agencé dans un centre de données DC et implémente un réseau de commutation Ethernet correspondant à un réseau local virtuel de commutation VLAN. Un tel réseau virtuel VLAN correspond, de manière connue en soi et en référence à la nomenclature du modèle OSI (acronyme de l'expression anglaise « Open Systems Interconnection »), à un réseau de niveau 2 permettant de segmenter le trafic échangé sur ce réseau en fonction d'adresses matérielles, dites « adresses MAC » (acronyme de l'expression anglais « Media Access Control »), d'appareils détenus par des utilisateurs.

Le système informatique SI est configuré pour mettre en œuvre une virtualisation de serveurs interconnectés via le réseau virtuel VLAN. A cet effet, et tel qu'illustré dans le mode de réalisation de la figure 1, le système informatique SI comporte un système de gestion de virtualisation SGV qui comprend, de manière connue en soi :
- un dispositif de gestion du réseau local dit « dispositif VNM » (acronyme de l'expression anglaise « Virtual Network Manager »). Il s'agit d'une entité configurée pour gérer la création d'interfaces virtuelles sur des éléments de commutation virtuels (logiciels dans le système d'exploitation, ou matériels dans les cartes d'interfaces réseau) de serveurs informatiques ;
- un dispositif de gestion d'infrastructures virtuelles dit « dispositif VIM » (acronyme de l'expression anglaise « Virtual Infrastructure Manager »). Il s'agit d'une entité configurée pour gérer la création de machines virtuelles ou d'ensembles de containers dans un serveur informatique.

Dans le présent mode de réalisation, le système informatique SI comporte également deux serveurs informatiques, à savoir :
- un premier serveur SERV-1 dans lequel sont connectés un proxy virtuel de commutation multiprotocole ave étiquette, dit « proxy source » PR-S, et un hôte dit « hôte source » CE-S. Ledit proxy source PR-S est un proxy utilisant le mécanisme de transport MPLS (acronyme de l'expression anglaise « Multi Label Protocol Switching ») ;
- un deuxième serveur SERV-2 dans lequel sont connectés un proxy virtuel MPLS, dit « proxy destination » PR-D1, et un hôte, dit « hôte destination » CE-D1. Ledit proxy destination PR-D1 est un proxy utilisant également le mécanisme de transport MPLS.

Lesdits proxys source PR-S et destination PR-D1 sont en outre connectés au réseau local VLAN.

Bien qu'il soit considéré dans le mode de réalisation de la figure 1 que le système informatique SI ne comporte que deux serveurs, dont un seul comportant un proxy/hôte source et un seul comportant un proxy/hôte destination), il importe de noter qu'il ne s'agit là que d'une variante d'implémentation de l'invention visant à en simplifier la description. Il n'en reste pas moins que qu'autres variantes d'implémentation sont envisageables, comme par exemple un seul serveur comportant un proxy/hôte source et une pluralité de serveurs comportant chacun un proxy/hôte destination, ou bien encore une pluralité de serveurs comportant chacun un proxy/hôte source et un seul serveur comportant un proxy/hôte destination, ou bien encore une pluralité de serveurs comportant chacun un proxy/hôte source et une pluralité de serveurs comportant chacun un proxy/hôte destination.

D'une manière générale, aucune limitation n'est attachée au nombre de serveurs comportant chacun un proxy/hôte source et au nombre de serveurs comportant chacun un proxy/hôte destination. Bien entendu, aucune limitation n'est non plus attachée au nombre d'hôtes pouvant être intégrés à un serveur. Par exemple, un serveur peut héberger plusieurs hôtes sources ou plusieurs hôtes destination, ou bien encore un hôte source et un hôte destination, ou bien encore un ou plusieurs hôtes sources et un ou plusieurs hôtes destination.

Enfin, aucune limitation n'est attachée au nombre de réseaux privés virtuels VPNs auxquels les proxys peuvent être raccordés. Par exemple, un serveur peut héberger plusieurs hôtes source pour lesquels un proxy devra mémoriser un identifiant différent pour leurs interfaces Ethernet virtuelles (il s'agit ici d'un identifiant dit « identifiant tunnel » comme cela est décrit plus en détails ultérieurement).

Conformément à l'invention, le proxy source PR-S est configuré pour réaliser des traitements permettant à l'hôte source CE-S de communiquer avec l'hôte destination CE-D1 au sein d'un réseau privé virtuel de communication VPN donné, via l'émission de trames Ethernet, et en mettant en œuvre un procédé de communication, dit « premier procédé », selon l'invention.

Le proxy destination PR-D1 est quant à lui configuré pour réaliser des traitements permettant à l'hôte destination CE-D1 de communiquer avec l'hôte source CE-S au sein dudit réseau privé VPN donné, via la réception de trames Ethernet, et en mettant en œuvre un procédé de communication, dit « deuxième procédé », selon l'invention.

On note alors que pour la mise en œuvre desdits premier et deuxième procédés, il est considéré que lesdits proxys source PR-S et destination PR-D1 sont rattachés au même réseau privé VPN donné de sorte à permettre aux hôtes source CE-S et destination CE-D1 de communiquer entre eux.

De manière conventionnelle, chaque hôte contenu dans un serveur est associé à une adresse matérielle MAC ainsi qu'à une adresse IP. La manière dont une adresse matérielle MAC peut être attribuée à un hôte est détaillée ultérieurement.

Chaque réseau virtuel privé est également associé à un identifiant permettant de le distinguer d'autres réseaux privés virtuels.

Pour la suite de la description, on adopte les notations selon lesquelles les adresses MAC des hôtes source CE-S et destination CE-D1 sont respectivement référencées CE-S MAC@ et CE-D1 MAC@. On adopte également la notation selon laquelle l'adresse IP de l'hôte destination CE-D1 est référencée CE-D1 NH@. Enfin, l'identifiant du réseau privé virtuel VPN associé aux hôtes source CE-S et destination CE-D1 est quant à lui noté VPN-ID.

La figure 2 représente schématiquement un exemple d'architecture matérielle du proxy source PR-S appartenant au système informatique SI de la figure 1, pour la mise en œuvre du premier procédé selon l'invention.

Tel qu'illustré par la figure 2, le proxy source PR-S dispose de l'architecture matérielle d'un ordinateur. Ainsi, le proxy source PR-S comporte, notamment, un processeur 1-S, une mémoire vive 2-S, une mémoire morte 3-S et une mémoire non volatile 4-S. Il comporte en outre un module de communication 5-S.

La mémoire morte 3-S du proxy source PR-S constitue un support d'enregistrement conforme à l'invention, lisible par le processeur 1-S et sur lequel est enregistré un programme d'ordinateur PROG-S conforme à l'invention, comportant des instructions pour l'exécution d'étapes du premier procédé. Le programme PROG-S définit des modules fonctionnels (en l'espèce, il s'agit ici de modules logiciels) du proxy source PR-S, qui s'appuient ou commandent les éléments matériels 1-S à 5-S du proxy source PR-S cités précédemment, et qui comprennent notamment :
- un module d'exécution MOD_EXE-S configuré pour exécuter une requête reçue en provenance du système de gestion de virtualisation SGV, ladite requête étant établie de sorte à configurer, sur le réseau privé VPN, une interface virtuelle pour l'hôte source CE-S. A cet effet, ladite requête comporte une demande d'association de l'adresse matérielle CE-S MAC@ avec un identifiant, dit « identifiant tunnel » Tunnel-ID, associé à l'identifiant VPN-ID,
- un premier module de transmission MOD_TX1-S configuré pour transmettre au proxy destination PR-D1 une requête émise par l'hôte source CE-S, ladite requête étant une requête de résolution d'adresse pour l'adresse CE-D1 NH@,
- un deuxième module de transmission MOD_TX2-S configuré pour transmettre à l'hôte source CE-S une réponse à ladite requête de résolution, ladite réponse étant émise par l'hôte destination CE-D1 et reçue en provenance du proxy destination PR-D1, ainsi que comportant l'adresse matérielle CE-D1 MAC@,
- un module de réception MOD_RX-S configuré pour recevoir, en provenance de l'hôte source CE-S, une trame Ethernet encapsulant un paquet IP émis par l'hôte source CE-S à destination de l'hôte destination CE-D1, ladite trame Ethernet comportant les adresses matérielles CE-S MAC@ et CE-D1 MAC@,
- un module d'insertion MOD_INSERT-S configuré pour insérer, dans la trame Ethernet, l'identifiant tunnel entre lesdites adresses matérielles CE-S MAC@, CE-D1 MAC@ et le paquet IP,
- un troisième module de transmission MOD_TX3-S configuré pour transmettre ladite trame Ethernet au proxy destination PR-D1.

Le module de communication 5-S permet au proxy source PR-S de communiquer avec d'autres entités du système informatique SI, notamment l'hôte source CE-S, le dispositif VNM et le proxy destination PR-D1. Il peut comprendre par exemple une carte réseau virtuelle ou tout autre moyen permettant de se connecter au réseau local VLAN. Ledit module de communication 5-S intègre notamment lesdits premier, deuxième et troisième modules de transmission MOD_TX1-S, MOD_TX2-S, MOD_TX3-S ainsi que le module de réception MOD_RX-S.

Il est à noter que l'identifiant tunnel Tunnel-ID correspond, dans le présent mode de réalisation, à une étiquette MPLS et peut être déterminé de différentes manières.

Ainsi, et selon un premier exemple de réalisation, l'identifiant tunnel Tunnel-ID est identique à l'identifiant VPN-ID du réseau privé VPN.

Selon un deuxième exemple de réalisation, l'identifiant tunnel Tunnel-ID est contenu dans une table de données mettant en correspondance l'identifiant VPN-ID du réseau privé VPN avec ledit identifiant tunnel Tunnel-ID. Autrement dit, dans ce deuxième exemple, ladite table de données est un tableau prenant en entrée des identifiants de réseaux privés (dont l'identifiant VPN-ID) et fournissant en sortie des identifiants tunnels respectivement associés auxdits identifiants de réseaux privés.

Ladite table de données correspond par exemple à une table de commutation stockée par le proxy source PR-S, ou bien, de manière alternative, à une table de commutation stockée par un pont Ethernet virtuel auquel est connecté l'hôte source CE-S contenu dans le serveur SERV-1 hébergeant ledit proxy source PR-S.

La figure 3 représente schématiquement un exemple d'architecture matérielle du proxy destination PR-D1 appartenant au système informatique SI de la figure 1, pour la mise en œuvre du deuxième procédé selon l'invention.

Tel qu'illustré par la figure 3, le proxy destination PR-D1 dispose de l'architecture matérielle d'un ordinateur. Ainsi, le proxy destination PR-D1 comporte, notamment, un processeur 1-D1, une mémoire vive 2-D1, une mémoire morte 3-D1 et une mémoire non volatile 4-D1. Il comporte en outre un module de communication 5-D1.

La mémoire morte 3-D1 du proxy destination PR-D1 constitue un support d'enregistrement conforme à l'invention, lisible par le processeur 1-D1 et sur lequel est enregistré un programme d'ordinateur PROG-D1 conforme à l'invention, comportant des instructions pour l'exécution d'étapes du deuxième procédé. Le programme PROG-D1 définit des modules fonctionnels (en l'espèce, il s'agit ici de modules logiciels) du proxy destination PR-D1, qui s'appuient ou commandent les éléments matériels 1-D1 à 5-D1 du proxy destination PR-D1 cités précédemment, et qui comprennent notamment :
- un premier module de transmission MOD_TX1-D1 configuré pour transmettre à l'hôte destination CE-D1 une requête reçue en provenance du proxy source PR-S et émise par l'hôte source CE-S, ladite requête étant une requête de résolution d'adresse pour l'adresse CE-D1 NH@,
- un deuxième module de transmission MOD_TX2-D1 configuré pour transmettre au proxy source PR-S une réponse à ladite requête de résolution, ladite réponse étant émise par l'hôte destination CE-D1 et comportant l'adresse matérielle CE-D1 MAC@,
- un module de réception MOD_RX-D1 configuré pour recevoir, en provenance du proxy source PR-S, une trame Ethernet encapsulant un paquet IP émis par l'hôte source à destination de l'hôte destination, ladite trame Ethernet comportant les adresses matérielles CE-S MAC@ et CE-D1 MAC@,
- un module de vérification MOD_VERIF-D1 configuré pour vérifier une correspondance entre, d'une part, un premier identifiant, dit « identifiant tunnel », inséré entre lesdites adresses matérielles CE-S MAC@, CE-D1 MAC@ et le paquet IP, et, d'autre part, un deuxième identifiant contenu dans une table de données mettant en correspondance l'adresse matérielle CE-D1 MAC@ avec ledit deuxième identifiant. En notre qu'en pratique, l'identifiant tunnel considéré ici correspond à un identifiant tunnel Tunnel-ID inséré par le proxy source PR-S dans ladite trame Ethernet au moyen de son module d'insertion MOD_INSERT-S,
- un module de retrait MOD_DELETE-D1 configuré pour retirer l'identifiant tunnel de la trame Ethernet reçue si la vérification de correspondance est positive,
- un troisième module de transmission MOD_TX3-D1 configuré pour transmettre la trame Ethernet à l'hôte destination CE-D1 si la vérification de correspondance est positive et après que l'identifiant tunnel ait été retiré.

Le module de communication 5-D1 permet au proxy destination PR-D1 de communiquer avec d'autres entités du système informatique SI, notamment l'hôte source CE-S, le dispositif VNM et le proxy source PR-S. Il peut comprendre par exemple une carte réseau virtuelle ou tout autre moyen permettant de se connecter au réseau local VLAN. Ledit module de communication 5-D1 intègre notamment lesdits premier, deuxième et troisième modules de transmission MOD_TX1-D1, MOD_TX2-D1, MOD_TX3-D1 ainsi que le module de réception MOD_RX-D1.

Il convient de noter que, suivant des dispositions similaires à celles décrites ci-avant pour ce qui est des possibilités de détermination de l'identifiant tunnel Tunnel-ID, la table de données utilisée par le module de vérification MOD_VERIF-D1 peut par exemple correspondre à une table de commutation stockée par le proxy destination PR-D1, ou bien encore à une table de commutation stockée par un pont Ethernet virtuel auquel est connecté l'hôte destination CE-D1 contenu dans le serveur SERV-2 hébergeant ledit proxy destination PR-D1.

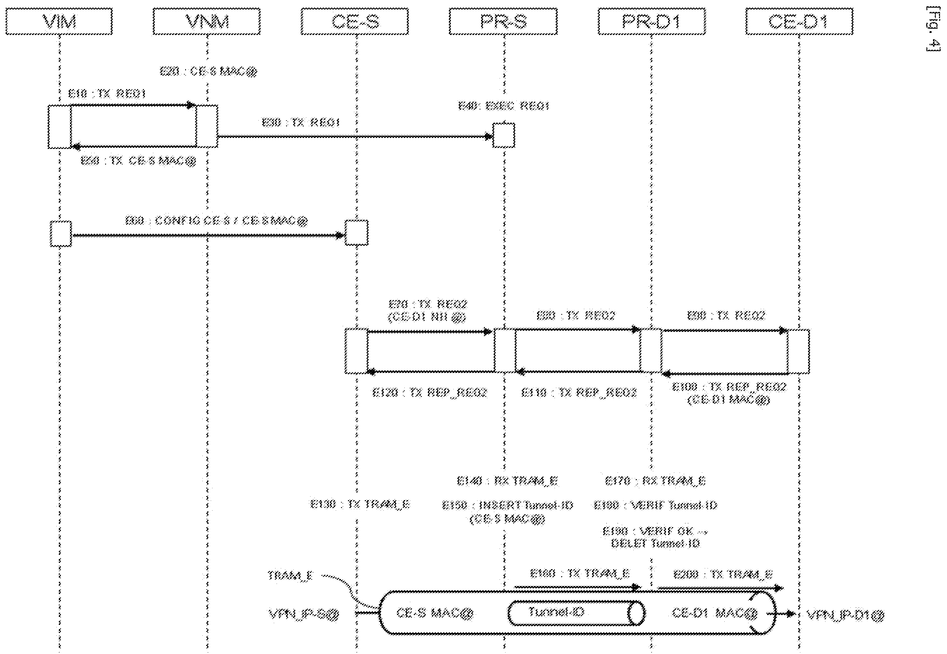

La figure 4 représente, sous forme d'ordinogramme, un mode particulier d'un procédé de communication, dit « procédé général », mis en œuvre par le système informatique SI. Ledit procédé général englobe lesdits premier et deuxième procédés selon l'invention respectivement mis en œuvre par le proxy source PR-S de la figure 2 et le proxy destination PR-D1 de la figure 3.

Tel qu'illustré par la figure 4, ledit procédé général comporte dans un premier temps une étape E10 d'émission d'une requête REQ1 par le dispositif VIM. Ladite requête REQ1 est établie de sorte à configurer, sur le réseau privé VPN et au niveau du proxy source PR-S, une interface virtuelle pour l'hôte source CE-S.

Sur réception de la requête REQ1, le dispositif VNM choisit une adresse matérielle MAC pour l'hôte source CE-S au cours d'une étape E20 dudit procédé général. Dans le présent mode de mise en œuvre, ladite adresse matérielle MAC s'écrit CE-S MAC@, conformément aux notations introduites précédemment.

Une fois l'adresse CE-S MAC@ choisie, ledit procédé général comporte une étape E30 de transmission de la requête REQ1, du dispositif VNM vers le proxy source PR-S. Etant donné qu'une adresse matérielle MAC a été choisie pour l'hôte source CE-S, ladite requête REQ1 comporte maintenant une demande d'association de l'adresse matérielle CE-S MAC@ avec un identifiant tunnel Tunnel-ID associé à l'identifiant VPN-ID.

Dans le présent mode de mise en œuvre, ledit identifiant Tunnel-ID est contenu dans une table de données TAB-S stockée par le proxy source PR-S, ladite table TAB-S mettant en correspondance l'identifiant VPN-ID du réseau privé VPN avec ledit identifiant tunnel Tunnel-ID.

Suite à la transmission de ladite requête REQ1 au proxy source PR-S, le procédé général comporte une étape E40 d'exécution de la requête REQ1 par le proxy source PR-S. Plus particulièrement, ladite étape E40 est mise en œuvre par le module d'exécution MOD_EXE-S équipant le proxy source PR-S et fait partie intégrante, dans le présent mode de mise en œuvre, dudit premier procédé.

On note qu'une fois l'adresse matérielle CE-S MAC@ choisie par le dispositif VNM, celle-ci est communiquée au dispositif VIM par ledit dispositif VNM. Cela fait l'objet d'une étape E50 du procédé général, comme l'illustre la figure 4. Dès lors, le dispositif VIM est en mesure de configurer l'hôte source CE-S avec l'adresse CE-S MAC@ (i.e. d'attribuer à l'hôte source CE-S l'adresse CE-S MAC@) qui a été choisie par le dispositif VNM, ce qui fait l'objet d'une étape E60 du procédé général.

Dans le mode de mise en œuvre de la figure 4, le procédé général comporte également une étape E70 d'émission d'une requête REQ2 par l'hôte source CE-S. Ladite requête est une requête de résolution d'adresse pour l'adresse IP CE-D1 NH@.

On note que l'émission de la requête s'effectue conformément à un protocole de résolution d'adresses « ARP » (acronyme de l'expression anglaise « Address Resolution Protocol ») dans le cas d'adresses IPv4, ou bien conformément à un protocole de résolution d'adresses « ICMPv6 » (acronyme de l'expression anglaise « Internet Control Message Protocol version 6) dans le cas d'adresses IPv6, tous deux connus de l'homme de l'art comme protocoles de résolution d'adresses matérielles utilisables au sein d'un réseau local virtuel de commutation VLAN.

Aussi, sur réception de la requête REQ2, le proxy source PR-S transmet ladite requête REQ2 au proxy destination PR-D1 au cours d'une étape E80 du procédé général. Plus particulièrement, ladite étape E80 est mise en œuvre par le premier module de transmission MOD_TX1-S équipant le proxy source PR-S et fait partie intégrante, dans le présent mode de mise en œuvre, dudit premier procédé.

Sur réception de la requête REQ2, le proxy destination PR-D1 transmet ladite requête REQ2 à l'hôte destination CE-D1 au cours d'une étape E90 du procédé général. Plus particulièrement, ladite étape E90 est mise en œuvre par le premier module de transmission MOD_TX1-D1 équipant le proxy destination PR-D1 et fait partie intégrante, dans le présent mode de mise en œuvre, dudit deuxième procédé.

Sur réception de la requête REQ2, l'hôte destination CE-D1 répond à ladite requête REQ2 en transmettant, au cours d'une étape E100 du procédé général, une réponse REP_REQ2 au proxy destination PR-D1, ladite réponse comportant l'adresse matérielle CE-D1 MAC@.

Il est à noter que l'attribution de ladite adresse CE-D1 MAC@ à l'hôte destination peut, suivant un exemple particulier de mise en œuvre du procédé général (exemple non représenté sur la figure 4), faire l'objet d'une procédure similaire à celle décrite ci-avant pour l'attribution de l'adresse CE-S MAC@ à l'hôte source CE-S. Autrement dit, selon un tel exemple, des étapes similaires aux étapes E10 à E60 décrites ci-avant peuvent être appliquées, de sorte que l'hôte destination CE-D1 soit en définitive configurée avec ladite adresse matérielle CE-D1 MAC@.

Bien entendu, le fait de considérer un tel exemple de détermination de l'adresse CE-D1 MAC@ ne constitue qu'une variante d'implémentation de l'invention. Ainsi, rien n'exclut que ladite adresse CE-D1 MAC@ soit déterminée préalablement à la mise en œuvre du procédé général selon toute méthode connue de l'homme de l'art.

Sur réception de ladite réponse REP_REQ2, le proxy destination PR-D1 transmet ladite réponse REP_REQ2 au proxy source PR-S au cours d'une étape E110 du procédé général. Plus particulièrement, ladite étape E110 est mise en œuvre par le deuxième module de transmission MOD_TX2-D1 équipant le proxy destination PR-D1 et fait partie intégrante, dans le présent mode de mise en œuvre, dudit deuxième procédé.

Sur réception de ladite réponse REP_REQ2, le proxy source PR-S transmet ladite réponse REP_REQ2 à l'hôte source CE-S au cours d'une étape E120 du procédé général. Plus particulièrement, ladite étape E120 est mise en œuvre par le deuxième module de transmission MOD_TX2-S équipant le proxy source PR-S et fait partie intégrante, dans le présent mode de mise en œuvre, dudit premier procédé.

Il est à noter que le procédé général est ici décrit dans un mode de mise en œuvre pour lequel le système informatique SI ne comporte qu'un seul proxy destination (en l'espèce, il s'agit du proxy destination PR-D1 des figures 1 et 3). On peut néanmoins remarquer que si ledit système informatique SI comporte une pluralité de proxy destination, la requête REQ2 émise par l'hôte source CE-S (étape E70) et reçue par le proxy source PR-S est transmise par ce dernier à l'ensemble desdits proxy destination. Bien entendu, dans la mesure où cette requête REQ2 concerne une résolution d'adresse pour l'adresse IP CE-D1 NH@, seul l'hôte destination CE-D1 y répond.

Par ailleurs, dans le mode de mise en œuvre de la figure 4, le procédé général comporte également une étape E130 d'émission, par l'hôte source CE-S et à destination de l'hôte destination CE-D1, d'un paquet IP au sein d'une trame Ethernet TRAM_E. Ainsi, ladite trame Ethernet TRAM_E encapsule ledit paquet IP émis par l'hôte source CE-S, et comporte ici les adresses matérielles CE-S MAC@ et CE-D1 MAC@ qui forment donc respectivement des adresses de source et de destination de la trame TRAM_E.

L'adresse IP source attachée à ce paquet IP est notée VPN_IP-S@ dans la figure 4.

Le procédé général comporte alors une étape E140 de réception, en provenance de l'hôte source CE-S, de la trame TRAM_E par le proxy source PR-S. Plus particulièrement, ladite étape E140 est mise en œuvre par le module de réception MOD_RX-S équipant le proxy source PR-S et fait partie intégrante, dans le présent mode de mise en œuvre, dudit premier procédé.

Sur réception de la trame TRAM_E, le proxy source PR-S insère dans ladite trame TRAM_E, et au cours d'une étape E150 du procédé général, l'identifiant tunnel Tunnel-ID entre les adresses matérielles CE-S MAC@, CE-D1 MAC@ et le paquet IP. Plus particulièrement, ladite étape E150 est mise en œuvre par le module d'insertion MOD_INSERT-S équipant le proxy source PR-S et fait partie intégrante, dans le présent mode de mise en œuvre, dudit premier procédé.

L'insertion de l'identifiant Tunnel-ID dans la trame TRAM_E est symbolisé dans la figure 4 par le fait que ledit identifiant Tunnel-ID définit un tunnel MPLS placé à l'intérieur de la trame TRAM-E. Le proxy source PR-S forme ainsi un point de terminaison dudit tunnel MPLS, ce qui est aussi le cas du proxy destination PR-D1 comme cela est décrit ci-après.

Il est à noter que si le paquet IP encapsulé dans la trame TRAM_E est conforme à un paquet IPv6, il peut être vérifié, avant d'insérer l'identifiant tunnel Tunnel-ID et suivant un exemple particulier de mise en œuvre, que ledit paquet IP ne comporte pas de message (requête ou réponse) de résolution d'adresse ICMPv6. Une telle vérification est ici assurée par le module d'insertion MOD_INSER-S dans ce cas particulier de mise en œuvre.

Le choix consistant à effectuer une telle vérification ne constitue toutefois qu'une variante d'implémentation de l'étape E150, et il est bien entendu possible d'envisager encore d'autres variantes.

En effet, contrairement aux paquets IP, qui ont vocation à être transférés par un routeur d'un VLAN vers un autre VLAN, les messages de résolution d'adresse matérielle ne peuvent être échangés qu'à l'intérieur d'un réseau local de commutation VLAN. Aussi, pour des adresses IP de prochain saut de type IPv4 (version 4 du protocole IP), les messages du protocole ARP sont encapsulés directement sur Ethernet et ne peuvent donc pas sortir d'un VLAN. Par contre, pour les adresses IP de prochain saut de type IPv6 (version 6 du protocole IP), les messages du protocole ICMPv6 sont encapsulé en IP sur Ethernet et utilisent des adresses IPv6 spécifiques, comme les « LLA » (acronyme de l'expression anglaise « Link-Local Address ») ou les SNMA (acronyme de l'expression anglaise « Solicited-Node Multicast Address ») dont le format défini dans le standard RFC 4861 de l'IETF leur permet d'être reconnues facilement par les routeurs pour éviter de les traiter comme des paquets IP. EN outre, les paquets IP de type IPv6 utilisent des adresses IPv6 différentes, appelées GUA (acronyme de l'expression anglaise « Global Unicast Address ») dont le format standard, différent des adresses LLA ou SNMA, leur permet d'être reconnues facilement par les routeurs pour autoriser leur transfert vers d'autres VLAN que celui sur lequel ils ont été reçus.

En d'autres termes, il est possible, suivant un autre exemple de mise en œuvre et sur la base des considérations susmentionnées, de déterminer si un paquet IPv6 comporte ou non un message de résolution d'adresse en effectuant cette fois-ci une vérification portant sur l'adresse destination utilisée (LLA et SNMA, ou bien GUA).

A titre illustratif, un exemple de vérification basé sur le type d'adresses destination peut consister à vérifier :
- si l'adresse est de type LLA ou SNMA, auquel cas il s'agit d'un message de résolution d'adresse, et il convient de ne pas insérer d'identifiant tunnel ; ou
- si l'adresse est de type GUA, auquel cas il s'agit d'un paquet IP, et il convient d'insérer un identifiant tunnel.

Un autre exemple de vérification basé sur le numéro de protocole contenu dans l'en-tête IP peut consister à vérifier :
- si le numéro de protocole est le numéro standard attribué au protocole ICMPv6, auquel cas il s'agit d'un message de résolution d'adresse, et il convient de ne pas insérer d'identifiant tunnel ; ou
- si le numéro de protocole n'est pas le numéro standard attribué au protocole ICMPv6, auquel cas il s'agit d'un paquet IP, et il convient d'insérer un identifiant tunnel.

Une fois l'identifiant Tunnel-ID ainsi inséré, la trame TRAM_E est transmise par le proxy source PR-S au proxy destination PR-D1. Cela fait l'objet d'une étape E160 du procédé général, comme l'illustre la figure 4. Plus particulièrement, ladite étape E160 est mise en œuvre par le troisième module de transmission MOD_TX3-S équipant le proxy source PR-S et fait partie intégrante, dans le présent mode de mise en œuvre, dudit premier procédé.

Le procédé général comporte alors une étape E170 de réception, en provenance du proxy source PR-S, de la trame TRAM_E par le proxy destination PR-D1. Plus particulièrement, ladite étape E170 est mise en œuvre par le module de réception MOD_RX-D1 équipant le proxy destination PR-D1 et fait partie intégrante, dans le présent mode de mise en œuvre, dudit deuxième procédé.

Sur réception de ladite trame TRAM_E, le proxy destination PR-D1 vérifie, au cours d'une étape E180 du procédé général, si l'identifiant Tunnel-ID, inséré entre lesdites adresses matérielles CE-S MAC@, CE-D1 MAC@ et le paquet IP, correspond à un identifiant, dit « deuxième identifiant », contenu dans une table de données TAB-D1 mettant en correspondance l'adresse matérielle CE-D1 MAC@ de l'hôte destination CE-D1 avec ledit deuxième identifiant. Plus particulièrement, ladite étape E180 est mise en œuvre par le module de vérification MOD_VERIF-S équipant le proxy destination PR-D1 et fait partie intégrante, dans le présent mode de mise en œuvre, dudit deuxième procédé.

On note dans le présent mode de mise en œuvre, ladite table de données TAB-D1 est stockée par le proxy destination PR-D1.

Finalement, si la vérification de correspondance entre l'identifiant tunnel Tunnel-ID et ledit deuxième identifiant est positive, le proxy destination PR-D1 retire l'identifiant Tunnel-ID de la trame TRAM_E cours d'une étape E190. Plus particulièrement, ladite étape E190 est mise en œuvre par le module de retrait MOD_DELET-D1 équipant le proxy destination PR-D1 et fait partie intégrante, dans le présent mode de mise en œuvre, dudit deuxième procédé.

En outre, suite au retrait de l'identifiant Tunnel-ID, le proxy destination PR-D1 transmet la trame TRAM_E à l'hôte destination CE-D1au cours d'une étape E200. Plus particulièrement, ladite étape E200 est mise en œuvre par le troisième module de transmission MOD_TX3-D1 équipant le proxy destination PR-D1 et fait partie intégrante, dans le présent mode de mise en œuvre, dudit deuxième procédé.

L'adresse IP destination attachée à ce paquet IP est notée VPN_IP-D1@ dans la figure 4.

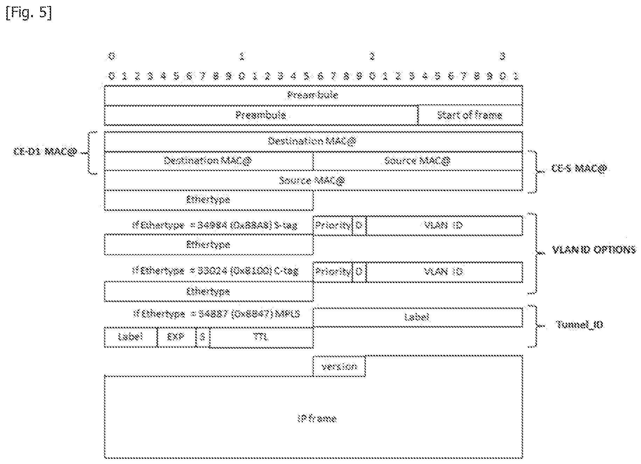

La figure 5 représente schématiquement la trame Ethernet TRAM_E après que le proxy source PR-S y ait introduit l'identifiant tunnel Tunnel-ID.

Comme cela peut être constaté sur cette figure 5, ledit identifiant Tunnel-ID est placé entre les adresses matérielles CE-S MAC@, CE-D1 MAC@ et le paquet IP (contenu ici dans une trame IP référencée au moyen de l'expression anglaise « IP frame »).

On note que la trame Ethernet TRAM_E peut comporter en option un ou plusieurs identifiants de VLAN S-VLAN ou C-VLAN connus de l'homme de l'art, pouvant l'un ou l'autre servir d'identifiant aux commutateurs Ethernet auxquels sont raccordés les serveurs informatiques SERV-1 et SERV-2, pour reconnaître, parmi d'autres, les trames à commuter au sein du réseau local virtuel de commutation VLAN auquel sont raccordés les proxys PR-S et PR-D1.

On décrit ici de manière plus détaillée les étapes permettant la transmission de la trame TRAM_E. Ainsi, lorsque l'hôte source CE-S doit transmettre un paquet IP à destination de l'hôte destination CE-D1 (plus particulièrement à destination d'un préfixe annoncé par l'hôte CE-D1, ce préfixe correspondant à l'adresse IP VPN_IP-D1@ mentionnée ci-avant), l'hôte source CE-S retrouve, dans une table de routage qu'il mémorise, la route vers le préfixe en question (i.e. ladite route peut donc être vue comme une adresse IP de prochain saut), puis, dans une table de résolution qu'il mémorise également, l'adresse CE-D1 MAC@ de l'hôte destination CE-D1 associée à la route en question. Ledit hôte source CE-S insère alors le paquet IP dans la trame Ethernet TRAM_E qui est ensuite transmise à destination de l'adresse CE-D1 MAC@ de l'hôte destination CE-D1 sur l'interface correspondante.

Lorsque la trame Ethernet TRAM_E est reçue par le pont Ethernet virtuel sur l'interface virtuelle de rattachement de l'hôte source CE-S, le proxy source PR-S ajoute l'identifiant tunnel Tunnel-ID juste avant l'en-tête du paquet IP en changeant l'Ethertype IP par un Ethertype MPLS dans la trame Ethernet TRAM_E d'origine. Cette dernière est ensuite transmise par le proxy source PR-S sur le VLAN associé au pont Ethernet virtuel sur l'interface physique du serveur informatique SERV-2 hébergeant l'hôte destination CE-D1. Le proxy destination PR-D1 vérifie la cohérence de l'identifiant Tunnel-ID et, en cas de vérification positive, retire cet identifiant Tunnel-ID et transmet le paquet IP directement dans la trame Ethernet TRAM_E au pont Ethernet virtuel associé au VLAN, qui le transfert à destination de l'hôte destination CE-D1 à travers son interface virtuelle de rattachement.

En résumé, le procédé général, et donc en particulier lesdits premier et deuxième procédés, permet de définir un plan de transfert permettant avantageusement de raccorder, sur le réseau VLAN établi à travers le centre de données DC, des interfaces Ethernet virtuelles de fonctions réseau virtuelles définies sur une pluralité de réseaux privés VPNs.

Par ailleurs, le procédé général, et donc en particulier lesdits premier et deuxième procédés, a été décrit jusqu'à présent en considérant l'envoi et la réception d'un paquet IP au moyen d'une trame Ethernet, via les étapes E130 à E200. Il importe toutefois de noter que la mise en œuvre de ces étapes est optionnelle, le procédé général pouvant en effet être limité aux seules étapes E10 à E120.

Le fait de mettre en œuvre uniquement les étapes E10 à E120 permet déjà de configurer le système informatique SI de sorte que le proxy source PR-S a pour seule connaissance, en tant qu'adresse de prochain saut, l'adresse matérielle de l'hôte source CE-S. Les requêtes de résolution d'adresse IP étant des requêtes à destination de l'ensemble des hôtes IP sur le réseau de commutation Ethernet VLAN, le proxy source PR-S peut les relayer sans connaître l'adresse matérielle de l'hôte IP destination. Les réponses de résolution d'adresse IP étant des réponses à destination de l'adresse matérielle de l'hôte source CE-S, le proxy source PR-S peut les relayer sur la simple connaissance de l'association entre l'adresse matérielle de l'hôte source CE-S et l'interface virtuelle sur laquelle il est raccordé. De cette manière, l'hôte source CE-S est en mesure de retrouver l'adresse matérielle CE-D1 MAC@ de l'hôte destination CE-D1sans solliciter le proxy source PR-S et en raccordant l'hôte destination CE-D1 portant l'adresse IP de prochain saut sur le même VLAN que celui sur lequel est raccordée l'interface de l'hôte source CE-S.

## Revendications

1. Procédé de communication mis en œuvre par un proxy virtuel de commutation multiprotocole avec étiquette, dit « proxy source » (PR-S), appartenant à un système informatique (SI) implémentant un réseau local virtuel de commutation (VLAN), ledit système informatique comportant en outre un système de gestion de virtualisation (SGV), un premier serveur (SERV-1) dans lequel sont connectés ledit proxy source et un hôte dit « hôte source » (CE-S), un deuxième serveur (SERV-2) dans lequel sont connectés un proxy virtuel de commutation multiprotocole avec étiquette, dit « proxy destination » (PR-D1), et un hôte, dit « hôte destination » (CE-D1), lesdits proxys source et destination étant connectés au réseau local ainsi que rattachés à un réseau privé virtuel de communication, ledit procédé comportant des étapes de :
- exécution (E40) d'une requête (REQ1) reçue en provenance du système de gestion de virtualisation pour configurer, sur ledit réseau privé, une interface virtuelle pour ledit hôte source, ladite requête comportant une demande d'association d'une adresse matérielle (CE-S MAC@) de l'hôte source avec un identifiant, dit « identifiant tunnel » (Tunnel-ID), associé à un identifiant (VPN-ID) dudit réseau privé,
- transmission (E80) au proxy destination d'une requête (REQ2) émise par l'hôte source, ladite requête étant une requête de résolution d'adresse pour une adresse IP (CE-D1 NH@) de l'hôte destination,
- transmission (E120) à l'hôte source d'une réponse (REP_REQ2) à ladite requête de résolution, ladite réponse étant émise par l'hôte destination et reçue en provenance du proxy destination, ainsi que comportant une adresse matérielle (CE-D1 MAC@) dudit hôte destination.

2. Procédé selon la revendication 1, ledit procédé comportant en outre des étapes de :
- réception (E140), en provenance de l'hôte source, d'une trame Ethernet (TRAM_E) encapsulant un paquet IP émis par l'hôte source à destination de l'hôte destination, ladite trame Ethernet comportant les adresses matérielles respectifs des hôtes source et destination,
- insertion (E150) dans la trame Ethernet de l'identifiant tunnel entre lesdites adresses matérielles et le paquet IP,
- transmission (E160) de ladite trame Ethernet au proxy destination.

3. Procédé selon l'une quelconque des revendications 1 et 2, dans lequel l'identifiant tunnel est identique à l'identifiant du réseau privé.

4. Procédé selon l'une quelconque des revendications 1 et 2, dans lequel l'identifiant tunnel est contenu dans une table de données mettant en correspondance l'identifiant dudit réseau privé avec ledit identifiant tunnel.

5. Procédé de communication mis en œuvre par un proxy virtuel de commutation multiprotocole avec étiquette, dit « proxy destination » (PR-D1), appartenant à un système informatique (SI) implémentant un réseau local virtuel de commutation (VLAN), ledit système informatique comportant en outre un système de gestion de virtualisation (SGV), un premier serveur (SERV-1) dans lequel sont connectés un proxy virtuel de commutation multiprotocole avec étiquette, dit « proxy source » (PR-S), et un hôte, dit « hôte source » (CE-S), un deuxième serveur (SERV-2) dans lequel sont connectés ledit proxy destination ainsi qu'un hôte dit « hôte destination » (CE-D1), lesdits proxys source et destination étant connectés au réseau local ainsi que rattachés à un réseau privé virtuel de communication, ledit procédé comportant des étapes de :
- transmission (E90) à l'hôte destination d'une requête (REQ2) reçue en provenance du proxy source et émise par l'hôte source, ladite requête étant une requête de résolution d'adresse pour une adresse IP (CE-D1 NH@) de l'hôte destination,
- transmission (E110) au proxy source d'une réponse (REP_REQ2) à ladite requête de résolution, ladite réponse étant émise par l'hôte destination et comportant une adresse matérielle (CE-D1 MAC@) dudit hôte destination.

6. Procédé selon la revendication 5, ledit procédé comportant en outre des étapes de :
- réception (E170), en provenance du proxy source, d'une trame Ethernet (TRAM_E) encapsulant un paquet IP, ladite trame Ethernet comportant les adresses matérielles respectifs des hôtes source et destination,
- vérification (E180) d'une correspondance entre, d'une part, un premier identifiant, dit « identifiant tunnel » (Tunnel-ID), inséré entre lesdites adresses matérielles et le paquet IP, et, d'autre part, un deuxième identifiant contenu dans une table de données mettant en correspondance l'adresse matérielle de l'hôte destination avec ledit deuxième identifiant,
- si la vérification de correspondance est positive, retrait (E190) de l'identifiant tunnel de ladite trame Ethernet et transmission (E200) de la trame Ethernet à l'hôte destination.

7. Procédé selon la revendication 4 ou la revendication 6, dans lequel une table de données contenant un identifiant utilisé par un proxy est une table de commutation stockée par ledit proxy.

8. Procédé selon la revendication 4 ou la revendication 6, dans lequel une table de données contenant un identifiant utilisé par un proxy est une table de commutation stockée par un pont Ethernet virtuel auquel est connecté l'hôte contenu dans le serveur hébergeant ledit proxy.

9. Programme d'ordinateur (PROG-S, PROG-D1) comportant des instructions pour la mise en œuvre d'un procédé selon l'une quelconque des revendications 1 à 8 lorsque ledit programme est exécuté par un ordinateur.

10. Support d'enregistrement lisible par un ordinateur sur lequel est enregistré un programme d'ordinateur selon la revendication 9.

11. Proxy virtuel de commutation multiprotocole avec étiquette, dit « proxy source » (PR-S), comportant des moyens configurés pour mettre en œuvre un procédé selon l'une quelconques des revendications 1 à 4, ou selon les revendications 4 et 7, ou selon les revendications 4 et 8.

12. Proxy virtuel de commutation multiprotocole avec étiquette, dit « proxy destination » (PR-D1), comportant des moyens configurés pour mettre en œuvre un procédé selon l'une quelconque des revendications 5 et 6, ou selon les revendications 6 et 7, ou selon les revendications 6 et 8.

13. Système informatique (SI) implémentant un réseau local virtuel de commutation (VLAN), ledit système informatique comportant un système de gestion de virtualisation (SGV), un premier serveur (SERV-1) dans lequel sont connectés un proxy virtuel (PR-S) selon la revendication 11 et un hôte dit « hôte source » (CE-S), un deuxième serveur (SERV-2) dans lequel sont connectés un proxy virtuel (PR-D1) selon la revendication 12 et un hôte, dit « hôte destination » (CE-D1), lesdits proxys source et destination étant connectés au réseau local ainsi que rattachés à un réseau privé virtuel de communication.

## Patentansprüche

1. Kommunikationsverfahren, das von einem virtuellen Multiprotocol-Label-Switching-Proxy, der als "Quell-Proxy" (PR-S) bezeichnet wird, durchgeführt wird, der zu einem Rechnersystem (SI) gehört, das ein virtuelles lokales Switching-Netzwerk (VLAN) implementiert, das Rechnersystem umfassend ferner ein Virtualisierungsverwaltungssystem (SGV), einen ersten Server (SERV-1), in dem der Quell-Proxy und ein Host, der als "Quell-Host" (CE-S) bezeichnet wird, verbunden sind, einen zweiten Server (SERV-2), in dem ein virtueller Multiprotocol-Label-Switching-Proxy, der als "Ziel-Proxy" (PR-D1) bezeichnet wird, und ein Host, der als "Ziel-Host" (CE-D1) bezeichnet wird, verbunden sind, wobei die Quell- und Ziel-Proxys mit dem lokalen Netzwerk verbunden sind und an ein virtuelles privates Kommunikationsnetzwerk angebunden sind, wobei das Verfahren die folgenden Schritte umfasst:
- Ausführen (E40) einer Anforderung (REQ1), die von dem Virtualisierungsverwaltungssystem empfangen wird, um über das private Netzwerk eine virtuelle Schnittstelle für den Quell-Host zu konfigurieren, die Anforderung umfassend eine Anfrage zur Zuordnung einer Hardware-Adresse (CE-S MAC@) des Quell-Hosts mit einer Kennung, die als "Tunnelkennung" (Tunnel-ID) bezeichnet wird, die einer Kennung (VPN-ID) des privaten Netzwerks zugeordnet ist,
- Übertragen (E80) einer von dem Quell-Host gesendeten Anforderung (REQ2) an den Ziel-Proxy, wobei die Anforderung eine Adressauflösungsanforderung für eine IP-Adresse (CE-D1 NH@) des Ziel-Hosts ist,
- Übertragen (E120) einer Antwort (REP_REQ2) auf die Auflösungsanforderung an den Quell-Host, wobei die Antwort vom Ziel-Host gesendet wird und von dem Ziel-Proxy empfangen wird und eine Hardware-Adresse (CE-D1 MAC@) des Ziel-Hosts umfasst.

2. Verfahren nach Anspruch 1, wobei das Verfahren ferner die folgenden Schritte umfasst:
- Empfangen (E140) eines Ethernet-Frames (TRAM_E) von dem Quell-Host, der ein IP-Paket verkapselt, das von dem Quell-Host an den Ziel-Host gesendet wird, wobei der Ethernet-Frame die jeweiligen Hardware-Adressen des Quell- und Ziel-Hosts umfasst,
- Einfügen (E150) der Tunnelkennung in den Ethernet-Frame zwischen den Hardware-Adressen und dem IP-Paket,
- Übertragen (E160) des Ethernet-Frames an den Ziel-Proxy.

3. Verfahren nach einem der Ansprüche 1 und 2, wobei die Tunnelkennung mit der Kennung des privaten Netzwerks identisch ist.

4. Verfahren nach einem der Ansprüche 1 und 2, wobei die Tunnelkennung in einer Datentabelle enthalten ist, die die Kennung des privaten Netzwerks mit der Tunnelkennung abgleicht.

5. Kommunikationsverfahren, das von einem virtuellen Multiprotocol-Label-Switching-Proxy, der als "Ziel-Proxy" (PR-D1) bezeichnet wird, durchgeführt wird, der zu einem Rechnersystem (SI) gehört, das ein virtuelles lokales Switching-Netzwerk (VLAN) implementiert, das Rechnersystem umfassend ferner ein Virtualisierungsverwaltungssystem (SGV), einen ersten Server (SERV-1), in dem ein virtueller Multiprotocol-Label-Switching-Proxy, der als "Quell-Proxy" (PR-S) bezeichnet wird, und ein Host, der als "Quell-Host" (CE-S) bezeichnet wird, verbunden sind, einen zweiten Server (SERV-2), in dem der Ziel-Proxy und ein Host, der als "Ziel-Host" (CE-D1) bezeichnet wird, verbunden sind, wobei die Quell- und Ziel-Proxys mit dem lokalen Netzwerk verbunden und an ein virtuelles privates Kommunikationsnetzwerk angebunden sind, wobei das Verfahren die folgenden Schritte umfasst:
- Übertragen (E90) einer von dem Quell-Proxy empfangenen und von dem Quell-Host gesendeten Anforderung (REQ2) an den Ziel-Host, wobei die Anforderung eine Adressauflösungsanforderung für eine IP-Adresse (CE-D1 NH@) des Ziel-Hosts ist,
- Übertragen (E110) einer Antwort (REP_REQ2) auf die Auflösungsanforderung an den Quell-Proxy, wobei die Antwort vom Ziel-Host gesendet wird und eine Hardware-Adresse (CE-D1 MAC@) des Ziel-Hosts umfasst.

6. Verfahren nach Anspruch 5, wobei das Verfahren ferner die folgenden Schritte umfasst:
- Empfangen (E170) eines Ethernet-Frames (TRAM_E) von dem Quell-Proxy, der ein IP-Paket verkapselt, wobei der Ethernet-Frame die jeweiligen Hardware-Adressen des Quell- und Ziel-Hosts umfasst,
- Prüfen (E180) einer Übereinstimmung zwischen einerseits einer ersten Kennung, die als "Tunnelkennung" (Tunnel-ID) bezeichnet wird, die zwischen den Hardware-Adressen und dem IP-Paket eingefügt ist, und andererseits einer zweiten Kennung, die in einer Datentabelle enthalten ist, die die Hardware-Adresse des Ziel-Hosts mit der zweiten Kennung abgleicht,
- wenn die Übereinstimmungsprüfung positiv ist, Entfernen (E190) der Tunnelkennung aus dem Ethernet-Frame und Übertragen (E200) des Ethernet-Frames an den Ziel-Host.

7. Verfahren nach Anspruch 4 oder Anspruch 6, wobei eine Datentabelle, die eine Kennung enthält, die von einem Proxy verwendet wird, eine Switching-Tabelle ist, die von dem Proxy gespeichert wird.

8. Verfahren nach Anspruch 4 oder Anspruch 6, wobei eine Datentabelle, die eine Kennung enthält, die von einem Proxy verwendet wird, eine Switching-Tabelle ist, die von einer virtuellen Ethernet-Bridge gespeichert wird, mit der der Host verbunden ist, der in dem Server enthalten ist, der den Proxy hostet.

9. Computerprogramm (PROG-S, PROG-D1), das Anweisungen umfasst, die bei der Ausführung des Programms durch einen Computer ein Verfahren nach einem der Ansprüche 1 bis 8 durchführen.

10. Computerlesbares Speichermedium, auf dem ein Computerprogramm nach Anspruch 9 gespeichert ist.

11. Virtueller Multiprotocol-Label-Switching-Proxy, der als "Quell-Proxy" (PR-S) bezeichnet wird, umfassend Mittel, die dazu ausgestaltet sind, ein Verfahren nach einem der Ansprüche 1 bis 4 oder nach den Ansprüchen 4 und 7 oder nach den Ansprüchen 4 und 8 durchzuführen.

12. Virtueller Multiprotocol-Label-Switching-Proxy, der als "Ziel-Proxy" (PR-D1) bezeichnet wird, umfassend Mittel, die dazu ausgestaltet sind, ein Verfahren nach einem der Ansprüche 5 und 6 oder nach den Ansprüchen 6 und 7 oder nach den Ansprüchen 6 und 8 durchzuführen.

13. Rechnersystem (SI), das ein virtuelles lokales Switching-Netzwerk (VLAN) implementiert, das Rechnersystem umfassend ein Virtualisierungsverwaltungssystem (SGV), einen ersten Server (SERV-1), in dem ein virtueller Proxy (PR-S) nach Anspruch 11 und einen Host, der als "Quell-Host" (CE-S) bezeichnet wird, verbunden sind, einen zweiten Server (SERV-2), in dem ein virtueller Proxy (PR-D1) nach Anspruch 12 und ein Host, der als "Ziel-Host" (CE-D1) bezeichnet wird, verbunden sind, wobei die Quell- und Ziel-Proxys mit dem lokalen Netzwerk verbunden sind und an ein virtuelles privates Kommunikationsnetzwerk angebunden sind.

## Claims

1. Communication method implemented by a virtual multiprotocol-label-switching proxy, called the "source proxy" (PR-S), belonging to a computer system (SI) implementing a switching virtual local-area network (VLAN), said computer system further comprising a virtualization management system (SGV), a first server (SERV-1) in which are connected said source proxy and a host called the "source host" (CE-S), a second server (SERV-2) in which are connected a virtual multiprotocol-label-switching proxy, called the "destination proxy" (PR-D1), and a host, called the "destination host" (CE-D1), said source and destination proxies being connected to the local-area network and attached to a communication virtual private network, said method comprising steps of:
- execution (E40) of a request (REQ1) received from the virtualization management system to configure, on said private network, a virtual interface for said source host, said request containing a demand to associate a hardware address (CE-S MAC@) of the source host with an identifier, called the "tunnel identifier" (Tunnel-ID), associated with an identifier (VPN-ID) of said private network,
- transmission (E80) to the destination proxy of a request (REQ2) sent by the source host, said request being an address resolution request for an IP address (CE-D1 NH@) of the destination host,
- transmission (E120) to the source host of a response (REP_REQ2) to said resolution request, said response being sent by the destination host and received from the destination proxy, and containing a hardware address (CE-D1 MAC@) of said destination host.

2. Method according to Claim 1, said method further comprising steps of:
- reception (E140), from the source host, of an Ethernet frame (TRAM_E) encapsulating an IP packet sent by the source host to the destination host, said Ethernet frame containing the respective hardware addresses of the source and destination hosts,
- insertion (E150) into the Ethernet frame of the tunnel identifier between said hardware addresses and the IP packet,
- transmission (E160) of said Ethernet frame to the destination proxy.

3. Method according to either of Claims 1 and 2, wherein the tunnel identifier is identical to the identifier of the private network.

4. Method according to either of Claims 1 and 2, wherein the tunnel identifier is contained in a data table matching the identifier of said private network to said tunnel identifier.

5. Communication method implemented by a virtual multiprotocol-label-switching proxy, called the "destination proxy" (PR-D1), belonging to a computer system (SI) implementing a switching virtual local-area network (VLAN), said computer system further comprising a virtualization management system (SGV), a first server (SERV-1) in which are connected a virtual multiprotocol-label-switching proxy, called the "source proxy" (PR-S), and a host, called the "source host" (CE-S), a second server (SERV-2) in which are connected said destination proxy and a host called the "destination host" (CE-D1), said source and destination proxies being connected to the local-area network and attached to a communication virtual private network, said method comprising steps of:
- transmission (E90) to the destination host of a request (REQ2) received from the source proxy and sent by the source host, said request being an address resolution request for an IP address (CE-D1 NH@) of the destination host,
- transmission (E110) to the source proxy of a response (REP_REQ2) to said resolution request, said response being sent by the destination host and containing a hardware address (CE-D1 MAC@) of said destination host.

6. Method according to Claim 5, said method further comprising steps of:
- reception (E170), from the source proxy, of an Ethernet frame (TRAM_E) encapsulating an IP packet, said Ethernet frame containing the respective hardware addresses of the source and destination hosts,
- verification (E180) of a match between, on the one hand, a first identifier, called the "tunnel identifier" (Tunnel-ID), inserted between said hardware addresses and the IP packet, and, on the other hand, a second identifier contained in a data table matching the hardware address of the destination host to said second identifier,
- if the match verification is positive, removal (E190) of the tunnel identifier of said Ethernet frame and transmission (E200) of the Ethernet frame to the destination host.

7. Method according to Claim 4 or Claim 6, wherein a data table containing an identifier used by a proxy is a switching table stored by said proxy.

8. Method according to Claim 4 or Claim 6, wherein a data table containing an identifier used by a proxy is a switching table stored by a virtual Ethernet bridge to which is connected the host contained in the server hosting said proxy.

9. Computer program (PROG-S, PROG-D1) comprising instructions for implementing a method according to any of Claims 1 to 8 when said program is executed by a computer.

10. Computer-readable recording medium on which a computer program according to Claim 9 is recorded.

11. Virtual multiprotocol-label-switching proxy, called the "source proxy" (PR-S), comprising means configured to implement a method according to any of Claims 1 to 4, or according to Claims 4 and 7, or according to Claims 4 and 8.

12. Virtual multiprotocol-label-switching proxy, called the "destination proxy" (PR-D1), comprising means configured to implement a method according to either of Claims 5 and 6, or according to Claims 6 and 7, or according to Claims 6 and 8.

13. Computer system (SI) implementing a switching virtual local-area network (VLAN), said computer system comprising a virtualization management system (SGV), a first server (SERV-1) in which are connected a virtual proxy (PR-S) according to Claim 11 and a host called the "source host" (CE-S), a second server (SERV-2) in which are connected a virtual proxy (PR-D1) according to Claim 12 and a host, called the "destination host" (CE-D1), said source and destination proxies being connected to the local-area network and attached to a communication virtual private network.
